# EUROPÄISCHE PATENTSCHRIFT

(11) **EP 0 264 040 B1**
(45) Veröffentlichungstag und Bekanntmachung des Hinweises auf die Patenterteilung: **16.02.1994**
(21) Anmeldenummer: 87114473.9
(22) Anmeldetag: 03.10.1987
(51) Int. Cl.: B22F 3/00, C22C 32/00, F01N 7/00, F01N 7/18, F16J 15/08

(54) **Verwendung eines pulvermetallurgisch hergestellten Materials als Werkstoff zur Herstellung von Auspuff-Dichtringen**
Application of a material produced by a powder metallurgy process for the production of exhaust gaskets
Utilisation d'un matériau préparé par métallurgie des poudres pour la préparation de joints pour tuyaux d'échappement

(30) Priorität: 11.10.1986 DE 3634720
(43) Veröffentlichungstag der Anmeldung: 20.04.1988
(73) Patentinhaber: Schwäbische Hüttenwerke Gesellschaft mit beschränkter Haftung, D-73414 Aalen (DE)
(72) Erfinder: Härle, Hans A., Dipl.-Ing., D-7085 Bopfingen (DE)
(74) Vertreter: Lorenz, Werner, Dipl.-Ing.

(56) Entgegenhaltungen:
- EP-A- 0 103 676
- BE-A- 554 648
- DE-A- 1 056 439
- DE-B- 1 292 796
- GB-A- 1 066 794
- US-A- 3 127 668

## Beschreibung

Die Erfindung betrifft die Verwendung eines pulvermetallurgisch hergestellten Materials als Werkstoff zur Herstellung von Auspuff-Dichtringen.

Die Herstellung von Formteilen in der Pulvermetallurgie aus Metallpulver ist allgemein bekannt. Die verwendeten Pulver werden kalt oder warm in hydraulischen oder Exzenterpressen formgepreßt und anschließend gesintert. Unter Sintern versteht man Erhitzen in reduzierender Atmosphäre auf Temperaturen, die in Höhe von zwei Drittel bis vier Fünftel des Schmelzpunktes des Metallpulvers liegen. Dabei tritt ein Zusammenbacken der Metallflächen ein und eine Verfestigung der Pulvermischung. Gegenüber einem Guß-Gefüge ist das Sinter-Gefüge feinkörniger und gleichmäßiger und zeigt erhöhte Festigkeitseigenschaften. Ferner sind eine Porosität und eine geringe Dehnung herausragende Eigenschaften von Sinterteilen, welche jedoch in verschiedenen Fällen nachteilig sind. Sinterteile werden in der Technik in vielfältiger Weise eingesetzt, so vor allem als Lagerwerkstoffe und als Sinter-Metallfilter zur Reinigung von Flüssigmetallen.

Es sind auch Formteile bekannt, die aus einem schlauchartigen Metallgeflecht hergestellt und in eine endgültige Form zusammengepreßt worden sind. Sie finden Einsatz als Dichtung zwischen dem Abgaskrümmer und der Auspuffanlage von Automobilmotoren.

Wie bekannt, werden z.B. die Abgase von Automobilmotoren in einem Abgaskrümmer zusammengeführt, der normalerweise aus Gußeisen besteht und damit relativ starr ist. Der Krümmer ist am Motorblock befestigt und am anderen Ende mit der Auspuffanlage des Fahrzeuges, die üblicherweise aus Stahlrohr besteht und vom Chassis des Fahrzeuges getragen wird, verbunden. Durch die Schwingungen, die der im Chassis elastisch gelagerte Motor aufweist, was am stärksten beim Anlassen des Motors der Fall ist, gerät der Auspuffkrümmer in eine Pendelbewegung relativ zur Auspuffanlage, die einen Winkel von bis zu 5 Grad betragen kann. Aus diesem Grunde ist die Dichtung zwischen dem Abgaskrümmer und der Auspuffanlage problematisch, wobei hinzukommt, daß die Verbindung einerseits für die Abgase dicht sein soll, andererseits jedoch Drehbewegungen ohne wesentliche Geräusche und ohne starken Verschleiß aufnehmen soll. Außerdem sind Temperaturen von bis zu 900 Grad Celsius auszuhalten, ohne daß das Verbindungsteil zerstört wird.

Der Herstellungsaufwand für eine solche, aus schlauchartigem Metallgeflecht bestehende und formgepreßte Dichtung ist jedoch sehr groß.

Aus der EP-A-0 103 676 ist ein Dichtungsring insbesondere für die Abdichtung gelenkig verbundener Rohrverbindungen, z.B. Auspuffleitungen in Verbrennungsmotoren bekannt.

Der Dichtungsring weist mindestens eine als Gleitfläche dienende Mantelfläche auf. Er besteht aus einem Gleitmaterial mit untereinander verpreßten Fasern und Gleitmitteln. Die Fasern besitzen eine relativ kurze Faserlänge von 2 bis 8 mm und weisen darüber hinaus Durchmesser, die 0,05 bis 0,6 mm betragen, auf.

Der vorliegenden Erfindung liegt die Aufgabe zugrunde, einen Werkstoff zum Herstellen von Auspuffdichtringen zu schaffen, der verbesserte Festigkeitseigenschaften und außerdem eine gute Elastizität aufweist.

Erfindungsgemäß wird diese Aufgabe dadurch gelöst, daß als Werkstoff zur Herstellung von Auspuff-Dichtringen ein pulvermetallurgisch hergestelltes Material, bei dem Metalldrahtstücke von 0,1 bis 1 mm Durchmesser und 0,5 bis 4 mm Länge formgepreßt und nach dem Formpressen gesintert wurden, wobei zwischen die Metalldrahtstücke Füllstoffe eingelegt wurden, verwendet wird.

Im Unterschied zu Sinterteilen, die lediglich eine geringe Elastizität besitzen, weist der erfindungsgemäß verwendete Werkstoff eine deutlich höhere Elastizität auf.

Mit dem erfindungsgemäß verwendeten Material lassen sich Teile mit sehr geringer Dichte bei hoher Werkstoffestigkeit herstellen. Die üblicherweise mit Sinterteilen normaler Festigkeit erreichbaren Dichten werden dabei überraschenderweise deutlich unterschritten.

Weiterhin wurde festgestellt, daß das erfindungsgemäß verwendete Material eine hohe Aufnahmefähigkeit für Infiltration, und zwar nicht nur für Öle, sondern auch für Kunstharze, Elastomere und Kunststoffe besitzt.

Dadurch, daß zwischen den Metalldrahtstückchen Füllstoffe eingelegt werden, lassen sich Sinterteile mit wesentlich geringerem Gewicht herstellen. Dabei sind die verschiedensten Kombinationen möglich, so können z.B. Kunststoffe, wie z.B. Kunstharz oder eine Kunstharzverbindung als Füllstoffe verwendet werden. Der Kunststoff füllt dabei die Zwischenräume zwischen den einzelnen Metalldrahtstückchen aus. Das Mischungsverhältnis richtet sich dabei nach den gestellten Anforderungen hinsichtlich Gewicht und Festigkeit.

Als Größen für die Metalldrahtstücke werden Durchmesser von 0,1 bis 1 mm und Längen von 0,5 bis 4 mm verwendet. Dabei wird die Länge jedoch im allgemeinen stets deutlich größer sein als der Durchmesser, wobei sich die genauen Längen- und Durchmesserverhältnisse eines Drahtstückes nach den gestellten Anforderungen und Anwendungsgebieten richten.

Wie weiterhin festgestellt worden ist, sind keine wesentlichen Änderungen bei der Herstellung von aus dem erfindungsgemäß verwendeten Material bestehenden Formteilen notwendig.

Als Werkstoffe für die Metalldrahtstücke sind die verschiedensten Materialien möglich, wie z.B. Kupfer, Aluminium, Bronze, ferritischer und austenitischer Stahl, Beryllium, Sonderlegierungen und dergleichen.

Ein mit dem erfindungsgemäß verwendeten Material hergestellter Auspuff-Dichtring ist deutlich billiger als die bisher bekannten Auspuff-Dichtringe. Er besitzt zusätzlich auch eine ausreichende Festigkeit und Temperaturbeständigkeit und ist genügend elastisch, um die auftretenden Pendelbewegungen aufnehmen zu können.

Ein weiterer Vorteil gegenüber bekannten Auspuff-Dichtringen besteht darin, daß durch die erfindungsgemäße Materialverwendung die Formgebung des Dichtringes beliebig ist und insbesondere nicht auf rotationssymmetrische Teile ohne Vorsprünge und/oder Einkerbungen beschränkt ist, wie es z.B. bei der Herstellung aus einem Metallschlauch zwingend notwendig ist.

## Patentansprüche

1. Verwendung eines pulvermetallurgisch hergestellten Materials, bei dem Metalldrahtstücke von 0,1 bis 1 mm Durchmesser und 0,5 bis 4 mm Länge formgepreßt und nach dem Formpressen gesintert wurden, wobei zwischen die Metalldrahtstücke Füllstoffe eingelegt wurden, als Werkstoff zur Herstellung von Auspuffdichtringen.

2. Verwendung nach Anspruch 1, mit der Maßgabe, daß als Füllstoff Kunststoffe verwendet werden.

3. Verwendung nach Anspruch 2, mit der Maßgabe, daß als Kunststoff ein Kunstharz oder eine Kunstharzverbindung verwendet wird.

## Claims

1. Application of a material produced by a powder metallurgy process, in which metal wire pieces having a diameter of 0.1 to 1 mm and a length of 0.5 to 4 mm were compression moulded and then sintered after the compression moulding, fillers being inserted between the metal wire pieces, for the production of exhaust gaskets.

2. Application according to claim 1, provided that plastic materials are used as the fillers.

3. Application according to claim 2, provided that a synthetic resin or a synthetic resin compound is used as the plastic material.

## Revendications

1. Utilisation d'un matériau préparé par métallurgie des poudres, dans lequel des morceaux de fils métalliques d'un diamètre de 0,1 à 1 mm et d'une longueur de 0,5 à 4 mm sont mis en forme par pressage et sont frittés après le pressage et dans lequel des matières de remplissage sont placées entre les morceaux de fils métalliques, comme matériau pour la fabrication de joints d'étanchéité d'échappements.

2. Utilisation selon la revendication 1, dans laquelle des matières synthétiques sont utilisées comme matière de remplissage.

3. Utilisation selon la revendication 2, dans laquelle la matière synthétique utilisée est une résine synthétique ou un composé de résine synthétique.
